# EUROPEAN PATENT APPLICATION

(11) **EP 3 306 808 A1**
(43) Date of publication of application: **11.04.2018**
(21) Application number: 16802972.6
(22) Date of filing: 29.04.2016
(51) Int. Cl.: H02P 7/28, B25F 5/00, H02K 23/64, H02P 6/06

(54) **ELECTRIC TOOL**

(30) Priority: 29.05.2015 JP 2015109664
(71) Applicant: Hitachi Koki Co., Ltd., Tokyo 108-6020 (JP)
(72) Inventor: TANIMOTO, Hideyuki, Hitachinaka-City Ibaraki 312-8502 (JP); NAKAYAMA, Eiji, Hitachinaka-City Ibaraki 312-8502 (JP)
(74) Representative: Parker, Andrew James
(86) International application number: PCT/JP2016/063518
(87) International publication number: WO 2016/194535

(57) **Abstract**

To provide a power tool capable of suppressing variations in motor characteristics between external power sources with different voltage while preventing an increase in the size of the power tool. The power tool includes: a motor including a stator on which a plurality of windings are wound and a rotor rotatable relative to the stator; an output unit driven by rotation of the rotor; a power source connection part connectable to an external power source serving as a driving power source of the motor; power source voltage detecting means configured to perform detecting a voltage of the external power source connected to the power source connection part; and connection form changing means configured to perform changing a connection form of the plurality of windings on the basis of the voltage of the external power source.

## Description

### [Technical Field]

The present invention relates to a power tool, and particularly to a power tool having a motor.

### [Background Art]

Of the conventional power tools, an AC/DC power tool has been used which can selectively use either one of a commercial power source and a secondary battery as a driving power source of the motor. Generally, the motor used in such an AC/DC power tool is designed so as to have a prescribed input voltage (rated voltage) equal to the voltage of one of the commercial power source and the secondary battery, and thus predetermined motor characteristics are obtained when the prescribed input voltage (rated voltage) is applied to the motor from the one of the commercial power source and the secondary battery. As such, there arises a problem that the predetermined motor characteristics cannot be obtained when the other one of the commercial power source and the secondary battery that has a voltage different from the prescribed input voltage is used as a driving power source. In other words, there is a problem that the motor characteristics vary between the driving power sources with different voltages.

In order to solve the above problem, an electric air blower provided with a motor unit that includes a first stator with a first stator winding for a commercial power source and a second stator with a second stator winding for a secondary battery is known (Patent Literature 1). The electric air blower described in Patent Literature 1 is configured so that the motor characteristics obtained when the voltage of the commercial power source is applied to the first stator winding (i.e., when driven with the commercial power source) and the motor characteristics obtained when the voltage of the secondary battery is applied to the second stator (i.e., when driven with the secondary battery) are substantially equalized, thereby suppressing the variations in the motor characteristics between the driving power sources with different voltages.

### [Citation List]

### [Patent Literature]

[PTL 1]
Japanese Patent Application Publication No. 2003-093298

### [Summary of Invention]

### [Technical Problem]

However, in the above-described electric air blower, although the variations in the motor characteristics between when driven with the commercial power source and when driven with the secondary battery is suppressed, the configuration includes the two stators, namely, the first stator and the second stator, and thus the size of the motor unit increases, which leads to a problem in that the size of the electric air blower (power tool) increases.

In view of the foregoing, it is an object of the present invention to provide a power tool that can suppress the variations in the motor characteristics between the driving power sources with different voltages while preventing an increase in the size of the power tool.

### [Solution to Problem]

In order to attain the above and other objects, the present invention provides a power tool including: a motor including a stator on which a plurality of windings are wound and a rotor rotatable relative to the stator; an output unit driven by rotation of the rotor; a power source connection part connectable to an external power source serving as a driving power source of the motor; power source voltage detecting means configured to perform detecting a voltage of the external power source connected to the power source connection part; and connection form changing means configured to perform changing a connection form of the plurality of windings on the basis of the voltage of the external power source.

With the above configuration, the connection form of the plurality of windings wound on the stator can be changed in accordance with the voltage of the external power source (driving power source) connected to the power source connection part. In other words, an appropriate connection form for obtaining predetermined motor characteristics can be selected in accordance with the voltage of the external power source (driving power source) connected to the power source connection part. Accordingly, variations in the motor characteristics between the external power sources (driving power sources) with different voltages can be suppressed. In addition, with the above configuration, a stator on which stator windings corresponding to each of the plurality of external power sources are wound need not be separately provided for the purpose of suppressing the variations in the motor characteristics between the plurality of external power sources with different voltages. Therefore, an increase in the size of the power tool can be suppressed.

In the above configuration, it is preferable that the power source connection part includes: an AC connection terminal part connectable to an external AC power source; and a DC connection terminal part connectable to an external DC power source.

With this configuration, the power tool can use the external AC power source and the external DC power source as the driving power source. Accordingly, even in a working location where the external AC power source is not available, the power tool can perform the operation by virtue of using the external DC power source. Therefore, workability of the power tool can be improved.

Further, it is preferable that the connection form changing means performs the changing the connection form of the plurality of windings on the basis of a voltage of the external AC power source connected to the AC connection terminal part.

With this configuration, since the connection form of the plurality of windings can be changed on the basis of the voltage of the external AC power source connected to the AC connection terminal part, an appropriate connection form for obtaining the predetermined motor characteristics can be selected in accordance with the voltage of the external AC power source. Accordingly, the variations in the motor characteristics between the external power sources (driving power sources) with different voltages can be suppressed.

Further, it is preferable that the connection form changing means performs the changing the connection form of the plurality of windings on the basis of a voltage of the external DC power source connected to the DC connection terminal part.

With this configuration, since the connection form of the plurality of windings can be changed on the basis of the voltage of the external DC power source connected to the DC connection terminal part, an appropriate connection form for obtaining the predetermined motor characteristics can be selected in accordance with the voltage of the external DC power source. Accordingly, the variations in the motor characteristics between the external power sources (driving power sources) with different voltages can be suppressed.

Further, it is preferable that: the motor is an n-phase brushless motor; each phase of the n-phase brushless motor includes at least two of the plurality of windings; and the connection form changing means performs the changing the connection form of the plurality of windings by changing a connection form of the at least two windings in each phase.

With this configuration, in the multi-phase motor having a plurality of phases, the connection form of windings in each of the plurality of phases can be changed. Therefore, in the multi-phase motor, variations in the motor characteristics between the external power sources with different voltages can be suppressed.

Further, it is preferable that the connection form changing means performs the changing the connection form of the at least two windings in each phase by switching the connection form of the at least two windings in each phase between a series connection and a parallel connection.

With this configuration, the variations in the motor characteristics between the external power sources with different voltages can be suppressed.

Further, it is preferable that the connection form changing means performs the changing the connection form of the at least two windings in each phase by switching the connection form of the at least two windings in each phase among a series connection, a parallel connection, and a series-parallel connection.

With this configuration, the variations in the motor characteristics among three external power sources with different voltages can be suppressed.

Further, it is preferable that the power tool further includes voltage changing means configured to perform: changing a voltage based on the external power source after the connection form changing means performs the changing the connection form; and applying the changed voltage to the motor.

With this configuration, after suppressing the variations in the motor characteristics between the external power sources with different voltages by changing the connection form, the power tool can further change the voltage to be applied to the motor to make a fine adjustment in the motor characteristics. Thus, the variations in the motor characteristics between the external power sources with different voltages can be further suppressed.

Further, it is preferable that the voltage changing means performs the changing the voltage by changing a duty ratio.

With this configuration, the voltage based on the external power source can be changed by a simple configuration.

### [Advantageous Effects of Invention]

The power tool according to the present invention is capable of suppressing the variations in the motor characteristics between the external power sources with different voltage while preventing an increase in the size of the power tool.

### [Brief Description of Drawings]

[Fig. 1]

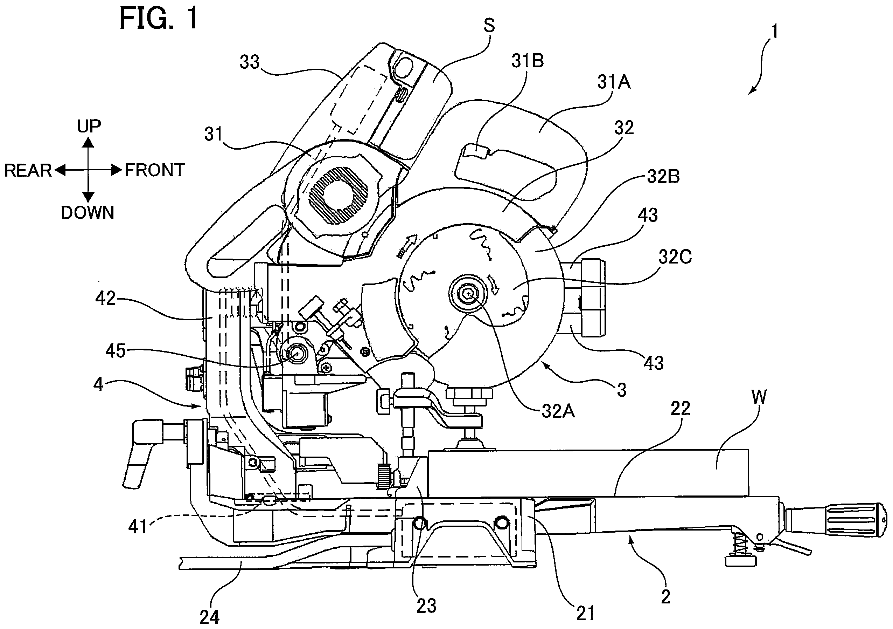

   Fig. 1 is a side view illustrating an appearance of a miter saw according to a first embodiment of the present invention.
[Fig. 2]

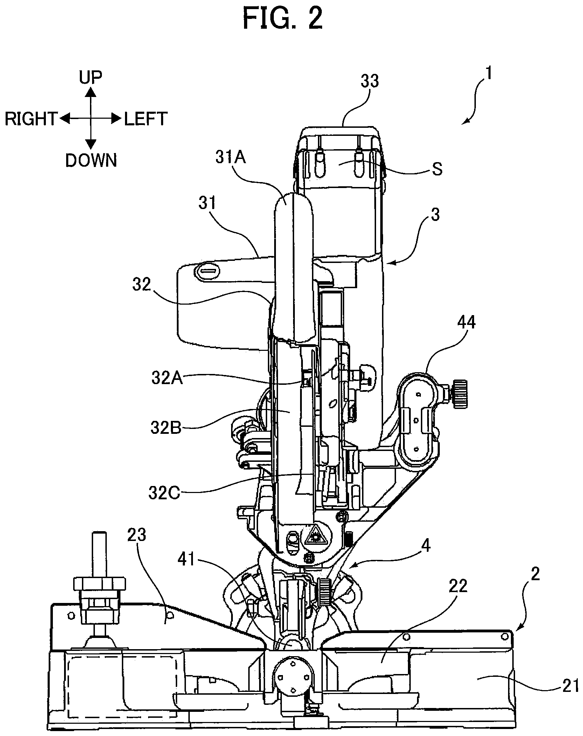

   Fig. 2 is a front view illustrating the appearance of the miter saw according to the first embodiment of the present invention.
[Fig. 3]

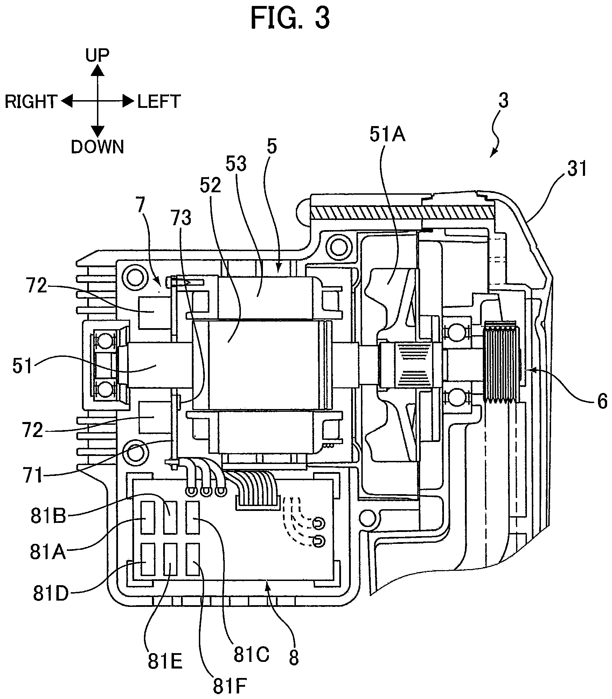

   Fig. 3 is a partially sectional front view illustrating an interior of a cutting portion case of the miter saw according to the first embodiment of the present invention.
[Fig. 4]

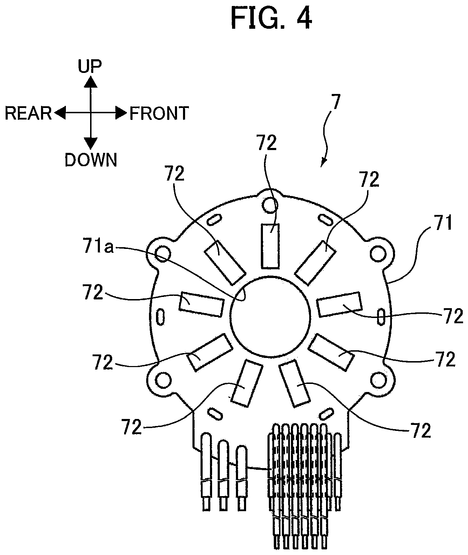

   Fig. 4 is a right side view illustrating a motor-substrate part of the miter saw according to the first embodiment of the present invention.
[Fig. 5]

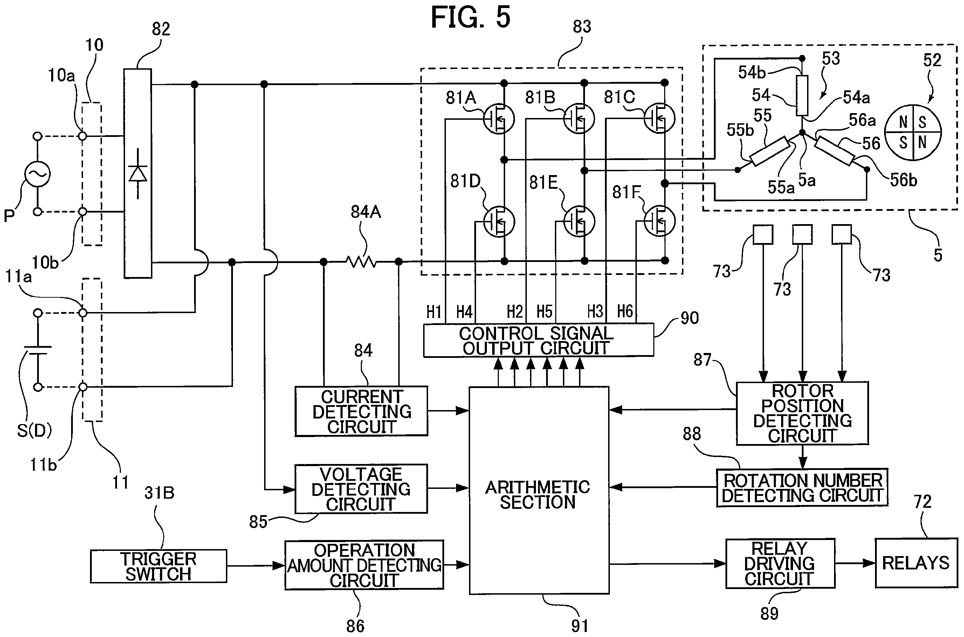

   Fig. 5 is a circuit diagram including a block diagram, and illustrates an electrical configuration of the miter saw according to the first embodiment of the present invention.
[Fig. 6]

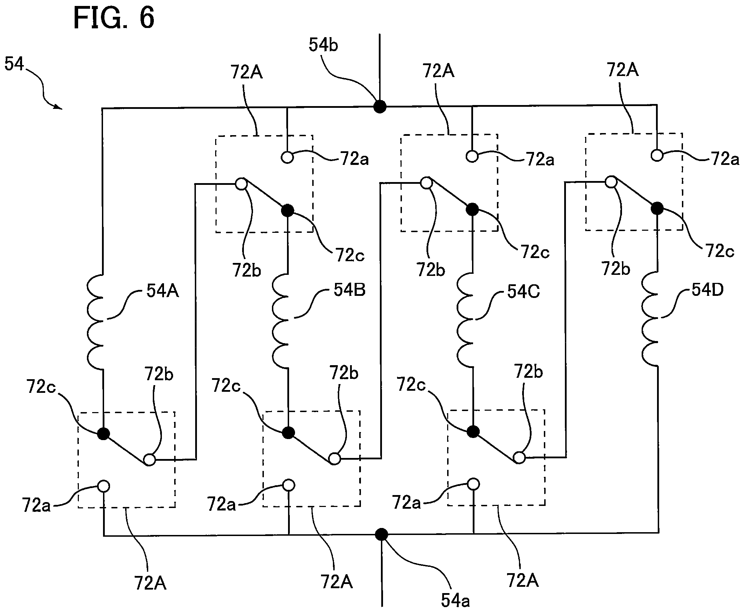

   Fig. 6 is a circuit diagram illustrating a U-phase winding part of the miter saw according to the first embodiment of the present invention, and illustrates a state where four U-phase windings of the U-phase winding part are connected to each other in series.
[Fig. 7]

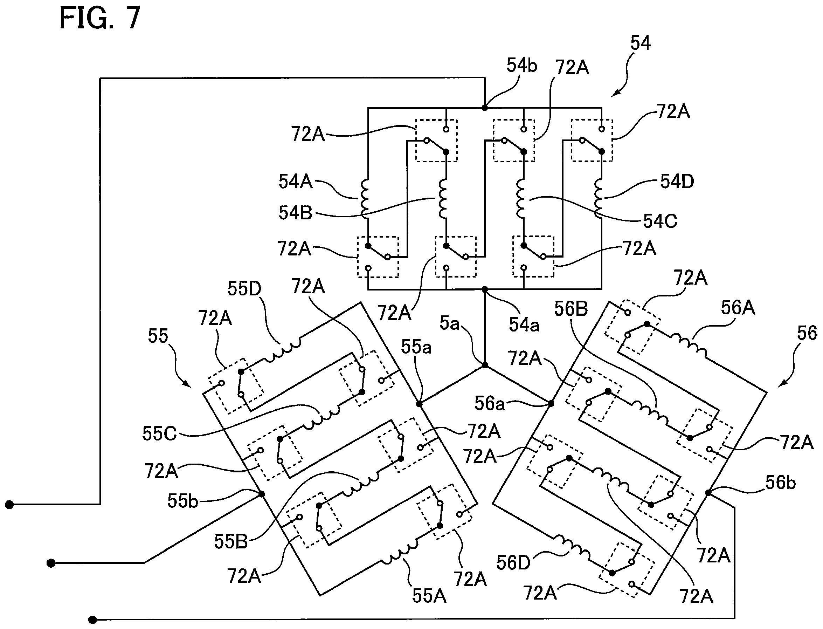

   Fig. 7 is a circuit diagram illustrating a connection state of the four U-phase windings, four V-phase windings, and four W-phase windings in the miter saw according to the first embodiment of the present invention, and illustrates a state in which the four windings within each phase are connected to each other in series.
[Fig. 8]

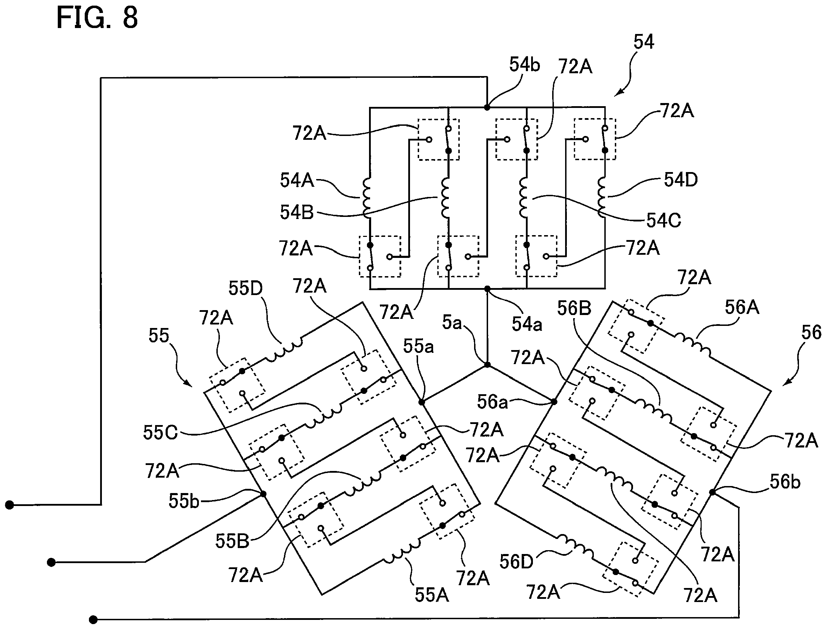

   Fig. 8 is a circuit diagram illustrating the connection state of the four U-phase windings, the four V-phase windings, and the four W-phase windings in the miter saw according to the first embodiment of the present invention, and illustrates a state in which the four windings within each phase are connected to each other in parallel.
[Fig. 9A]

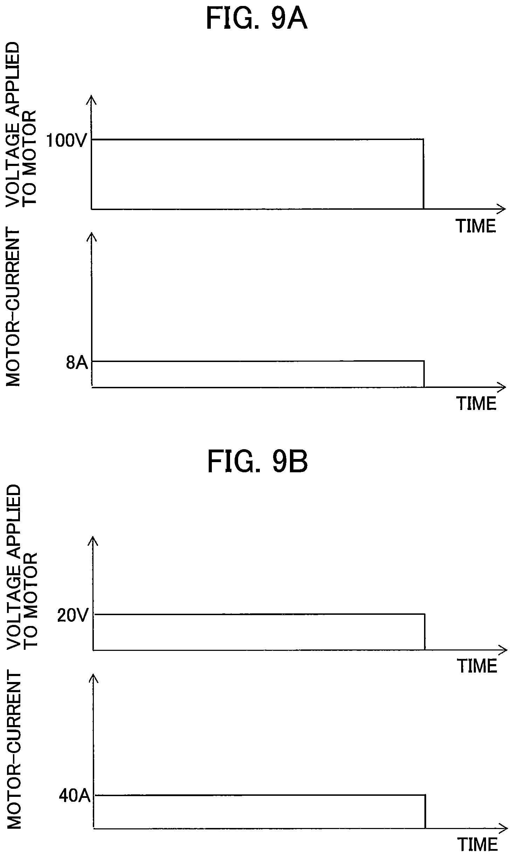

   Fig. 9A is a graphical representation illustrating a peak value of current that flows through an inverter circuit section and the motor of the miter saw according to the first embodiment of the present invention, and illustrates a case in which the motor is driven with a commercial power source.
[Fig. 9B]
   Fig. 9B is a graphical representation illustrating the peak value of the current that flows through the inverter circuit section and the motor of the miter saw according to the first embodiment of the present invention, and illustrates a case in which the motor is driven with a battery pack.
[Fig. 10A]

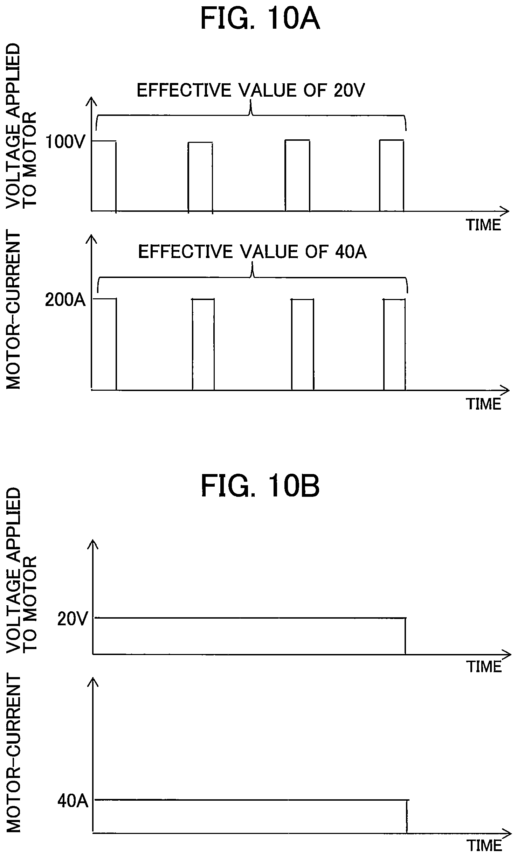

   Fig. 10A is a graphical representation illustrating a peak value of current that flows through an inverter circuit section and a motor of a conventional power tool, and illustrates a case in which the motor is driven with a commercial power source.
[Fig. 10B]
   Fig. 10B is a graphical representation illustrating the peak value of the current that flows through the inverter circuit section and the motor of the conventional power tool, and illustrates a case in which the motor is driven with a battery pack.
[Fig. 11]

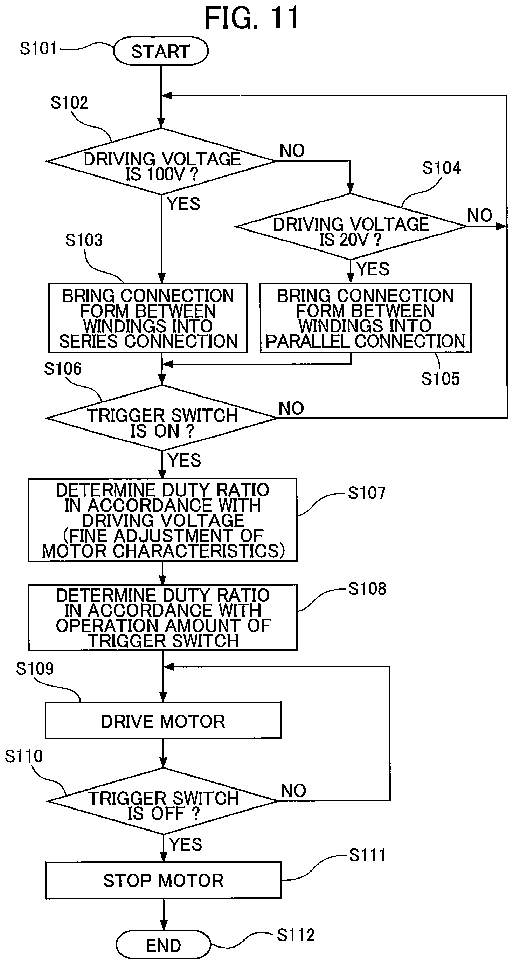

   Fig. 11 is a flowchart illustrating a drive control performed by an arithmetic section of the miter saw according to the first embodiment of the present invention.
[Fig. 12]

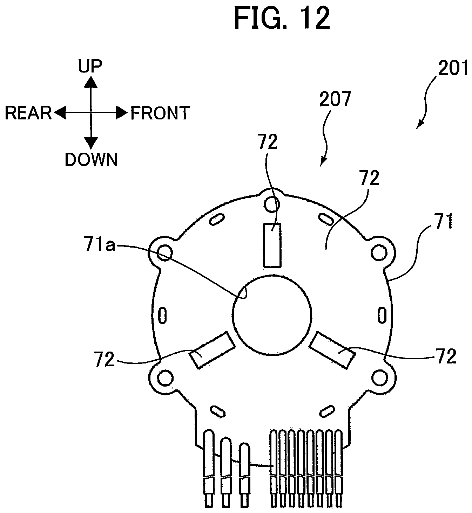

   Fig. 12 is a right side view illustrating a motor-substrate part of a miter saw according to a second embodiment of the present invention.
[Fig. 13]

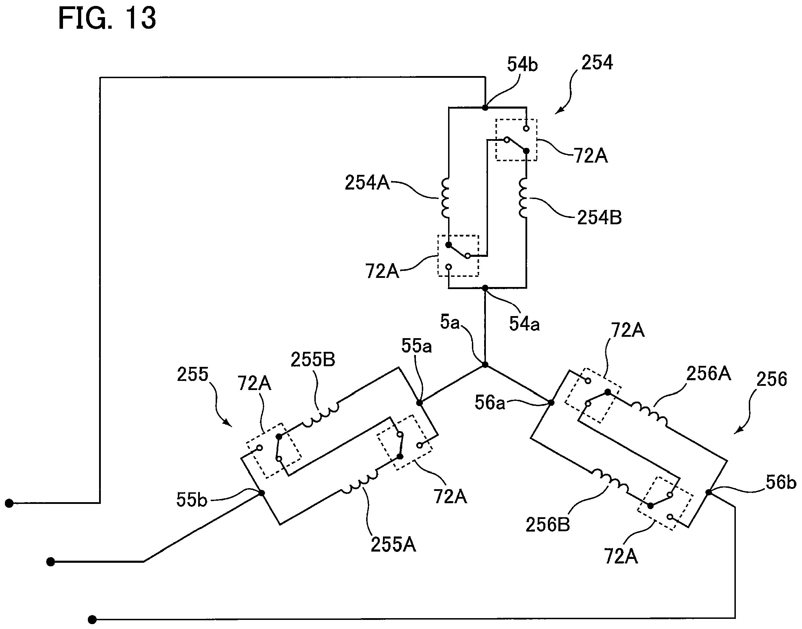

   Fig. 13 is a circuit diagram illustrating a connection state of two U-phase windings, two V-phase windings, and two W-phase windings in the miter saw according to the second embodiment of the present invention, and illustrates a state in which the two windings within each phase are connected to each other in series.
[Fig. 14]

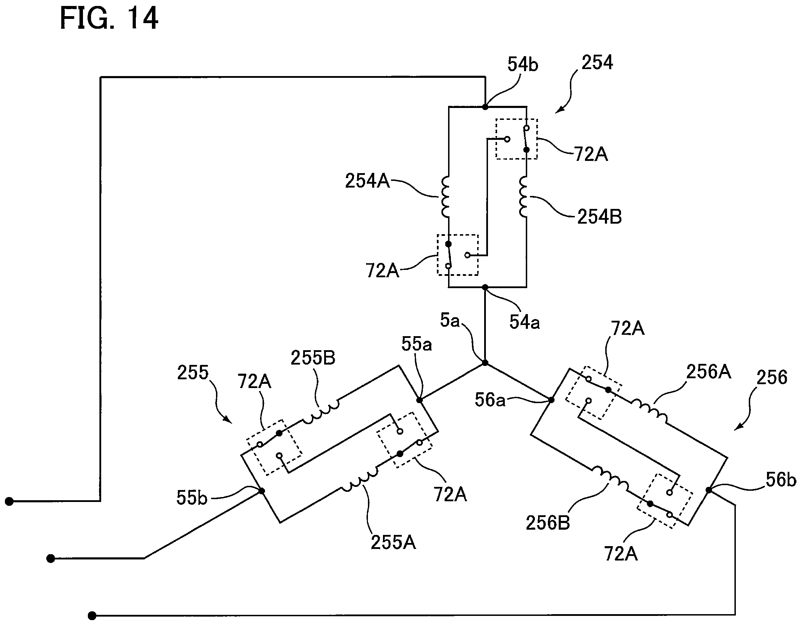

   Fig. 14 is a circuit diagram illustrating the connection state of the two U-phase windings, the two V-phase windings, and the two W-phase windings in the miter saw according to the second embodiment of the present invention, and illustrates a state in which the two windings within each phase are connected to each other in parallel.
[Fig. 15]

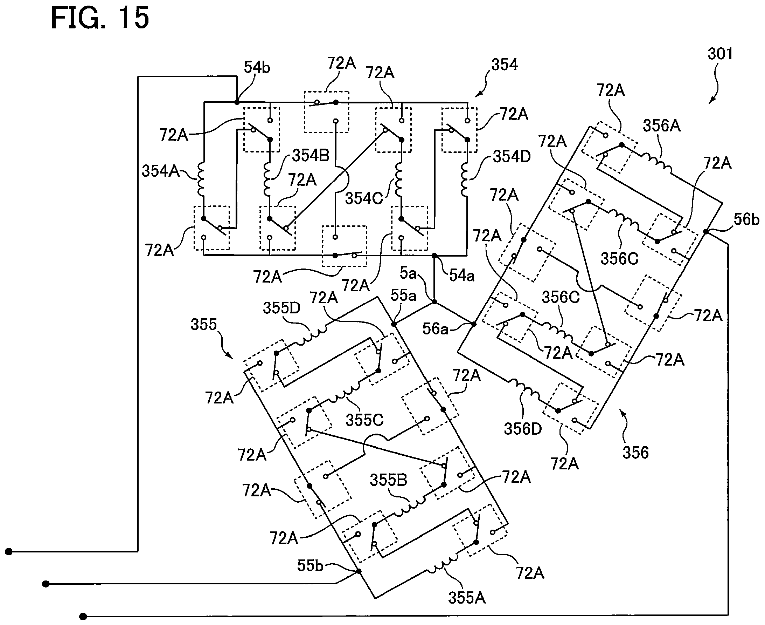

   Fig. 15 is a circuit diagram illustrating a connection state of four U-phase windings, four V-phase windings, and four W-phase windings in a miter saw according to a third embodiment of the present invention, and illustrates a state in which the four windings within each phase are connected to each other in series.
[Fig. 16]

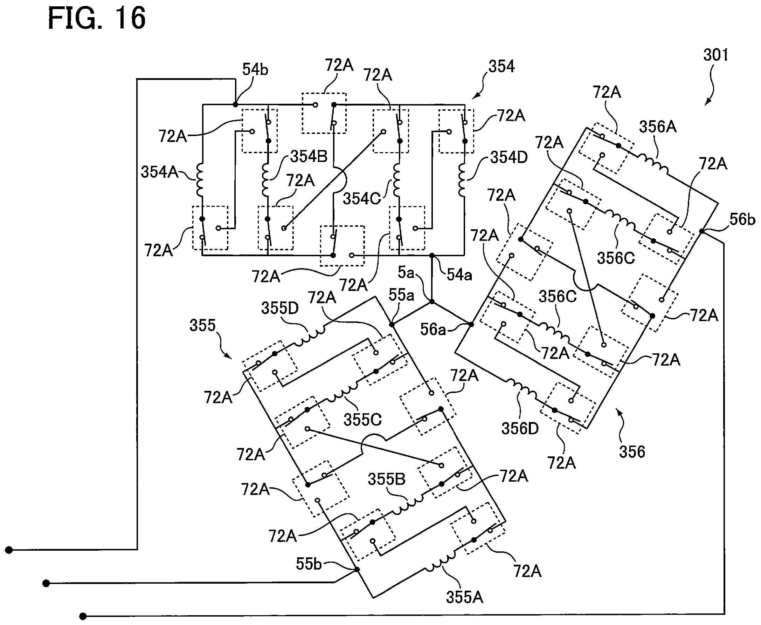

   Fig. 16 is a circuit diagram illustrating a connection state of the four U-phase windings, the four V-phase windings, and the four W-phase windings in the miter saw according to the third embodiment of the present invention, and illustrates a state in which the four windings within each phase are connected to each other in series-parallel.
[Fig. 17]

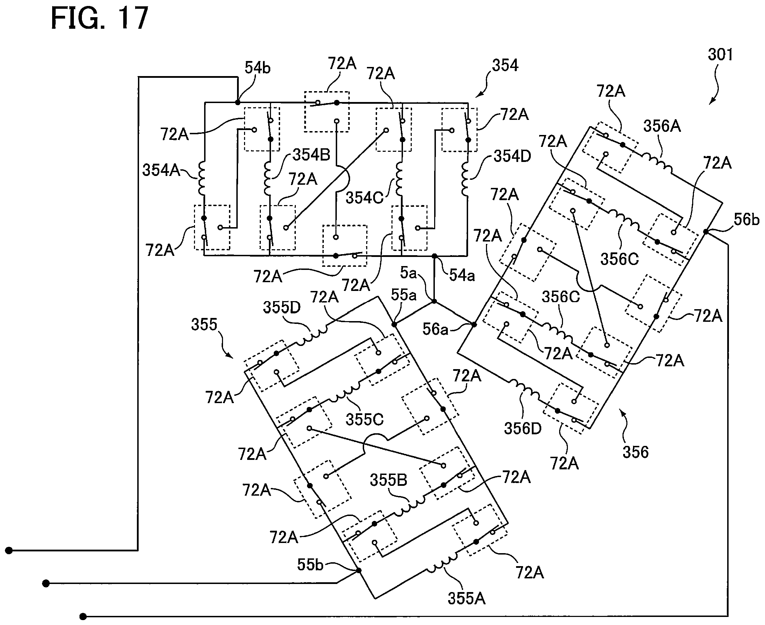

   Fig. 17 is a circuit diagram illustrating a connection state of the four U-phase windings, the four V-phase windings, and the four W-phase windings in the miter saw according to the third embodiment of the present invention, and illustrates a state in which the four windings within each phase are connected to each other in parallel.

### [Description of Embodiments]

Hereinafter, embodiments of the present invention will be described with reference to the accompanying drawings. Herein, a case in which the present invention is applied to a miter saw will be described as an example.

In the following description, when the description refers to a specific numerical value, such as "100°" in a rotation angle, the description is intended to include not only a case where the rotation angle is exactly the same as the above-described numerical value but also a case in which the rotation angle is substantially the same as the above-described numerical value. Also, when the description refers to a positional relationship, such as "parallel", "orthogonal", or "opposite", the description is intended to include not only a case where a positional relationship is in a perfectly parallel condition, a perfectly orthogonal condition, or a perfectly opposite condition, but also a case where a positional relationship is in a substantially parallel condition, a substantially orthogonal condition, or a substantially opposite condition.

First, a miter saw 1 serving as an example of a power tool according to a first embodiment of the present invention will be described with reference to Figs. 1 to 11. The top, the bottom, the front, and the rear indicated by the arrows in Fig. 1 are defined as the upward direction, the downward direction, the frontward direction, and the rearward direction, respectively. Furthermore, the left and the right when the miter saw 1 is viewed from the rear thereof are defined as the leftward direction and the rightward direction, respectively.

Figs. 1 and 2 are a side view and a front view, respectively, illustrating an appearance of the miter saw 1 and illustrate a state in which a battery pack S is attached to the miter saw 1. As illustrated in Figs. 1 and 2, the miter saw 1 includes a base portion 2, a cutting portion 3, a cutting-portion-supporting portion 4, and a motor 5. A workpiece W can be placed on the base portion 2. The cutting portion 3 rotatably supports a circular saw blade 32C. The cutting-portion-supporting portion 4 supports the cutting portion 3 so that the cutting portion 3 is pivotally movable in the upward/downward direction relative to the base portion 2 and the side surface of the circular saw blade 32C is tiltable relative to an upper surface of the base portion 2. The motor 5 is accommodated in the cutting portion 3.

The base portion 2 includes a base 21, a turntable 22, a fence 23, and a power cord 24.

The base 21 has a structure that can be placed on a floor surface. Further, the base 21 has a substantially rectangular shape as viewed from the above. The turntable 22 is embedded in the base 21. The upper surface of the turntable 22 is flush with the upper surface of the base 21. The upper surfaces of the turntable 22 and the base 21 form the upper surface of the base portion 2 on which the workpiece W can be placed. The turntable 22 is configured to be rotatable relative to the base 21 about a rotation shaft orthogonal to the upper surface of the turntable 22. When the turntable 22 is rotated, the cutting portion 3 and the cutting-portion-supporting portion 4 rotate along with the turntable 22.

The fence 23 is provided on the upper surface of the base 21 and has an abutment surface on which the workpiece W can be abutted. When the workpiece W is cut, the cutting operation is performed in a state where one surface of the workpiece W is abutted on the abutment surface of the fence 23. Accordingly, the cutting operation can be performed in a stable manner. When the turntable 22 is rotated relative to the base 21, the cutting portion 3 rotates along with the turntable 22 and the position of the cutting portion 3 relative to the fence 23 changes, thereby causing the angle formed by the fence 23 and the side surface of the circular saw blade 32C to be changed. With this configuration, the workpiece W which has been brought into abutment with the fence 23 can be cut at various angles.

The power cord 24 extends rearward from substantially the center in the frontward/rearward direction of the right side surface of the base 21. The leading end of the power cord 24 can be connected to a commercial power source P, or an external AC power source, such as a household outlet.

The cutting-portion-supporting portion 4 includes a tilting shaft 41, a holder 42, two guide bars 43, a slider 44, and a hinge 45.

The tilting shaft 41 is positioned at the rear end portion of the turntable 22 and extends in the frontward/rearward direction. The tilting shaft 41 is supported substantially in parallel to the upper surface of the turntable 22. The holder 42 extends in the upward/downward direction and is provided so as to be tiltable relative to the turntable 22 about the tilting shaft 41. The holder 42 can tilt in the leftward direction and the rightward direction from the posture perpendicular to the upper surface of the turntable 22 at a predetermined angle as viewed from the front. The holder 42 can be fixed at a desired tilting position within the tiltable range. Thus, the circular saw blade 32C is also fixed at a tilting angle the same as that of the holder 42, thereby enabling a so-called "bevel angle cutting" to be performed.

The two guide bars 43 extend substantially in parallel to each other in the frontward direction from the upper portion of the holder 42. The two guide bars 43 are inserted into the slider 44. The slider 44 is provided so as to be slidable in the frontward/rearward direction relative to the two guide bars 43. The hinge 45 couples the cutting portion 3 to the slider 44 so that the cutting portion 3 is pivotally movable relative to the slider 44. When the slider 44 is slid in the frontward/rearward direction relative to the two guide bars 43, the cutting portion 3 is moved in the frontward/rearward direction along with the slider 44.

The cutting portion 3 rotatably supports the circular saw blade 32C and includes a cutting portion case 31, a saw blade case 32, and a battery attaching portion 33.

As illustrated in Fig. 2, the cutting portion case 31 is coupled to the slider 44 via the hinge 45 so as to be pivotally movable. Thus, the cutting portion case 31 is attached to the slider 44 so as to be pivotally movable in directions toward and away from the base portion 2. The cutting portion case 31 is biased upward by a spring provided around the hinge 45. Therefore, unless a downward operation force is applied to an operation handle 31A provided on the upper front portion of the cutting portion case 31, the cutting portion 3 is maintained at a top dead center (i.e., the state illustrated in Fig. 1) by a stopper provided around the hinge 45. A trigger switch 31B for controlling rotation and stopping of the motor 5 is provided at the operation handle 31A. The motor 5, a rotation transmitting mechanism 6, a motor-substrate part 7, and a control-substrate part 8 are accommodated inside the cutting portion case 31.

The saw blade case 32 is formed integrally with the cutting portion case 31 and has a shape that covers the upper portion of the circular saw blade 32C. The saw blade case 32 includes an output shaft 32A and a protective cover 32B.

The output shaft 32A extends in the leftward/rightward direction and is rotatably supported by the saw blade case 32. The circular saw blade 32C is attached to the output shaft 32A and is rotated by the rotation of the output shaft 32A. The output shaft 32A is an example of an output unit of the present invention.

The protective cover 32B covers a portion of the circular saw blade 32C that is not covered by the saw blade case 32. The protective cover 32B is supported so as to be pivotally movable along the inner side surface of the saw blade case 32. When the cutting portion 3 is pushed downward from the position of the top dead center toward the bottom dead center, the protective cover 32B is pivotally moved by a link mechanism (not illustrated) in a direction causing the circular saw blade 32C to be exposed, thereby resulting in a state in which the workpiece W can be cut.

The battery attaching portion 33 extends upward from the upper rear end portion of the cutting portion case 31 and is configured to allow the battery pack S, serving as a driving power source for the motor 5, to be detachably attached to the battery attaching portion 33. The battery pack S is attached to the battery attaching portion 33 by sliding the battery pack S downward relative to the battery attaching portion 33. The battery pack S is detached from the battery attaching portion 33 by sliding the battery pack S upward relative to the battery attaching portion 33. The battery pack S includes a battery assembly having a plurality of secondary batteries serving as a driving power source for the motor 5. The battery pack S is an example of an external power source and an external DC power source of the present invention.

Next, the interior of the cutting portion case 31 will be described. Fig. 3 is a partially sectional front view illustrating the interior of the cutting portion case 31. As illustrated in Fig. 3, the portion of the cutting portion case 31 that extends in the leftward/rightward direction accommodates the motor 5, the rotation transmitting mechanism 6, the motor-substrate part 7, and the control-substrate part 8.

The motor 5 includes a rotating shaft 51, a rotor 52, and a stator 53. The rotating shaft 51 is rotatably supported by the cutting portion case 31 and extends in the frontward/rearward direction. The rotating shaft 51 outputs a rotational driving force. The left end portion of the rotating shaft 51 is connected to the rotation transmitting mechanism 6, and the rotational driving force of the rotating shaft 51 is transmitted to the rotation transmitting mechanism 6. A fan 51A is provided coaxially with the rotating shaft 51 and is positioned rightward of the portion at which the rotating shaft 51 is connected to the rotation transmitting mechanism 6.

The rotor 52 includes a permanent magnet and is fixed coaxially with the rotating shaft 51. The stator 53 is provided radially outside the rotor 52, and the rotor 52 is rotatable relative to the stator 53. The stator 53 includes three slots, namely, a U-phase slot, a V-phase slot, and a W-phase slot that are configured to face the rotor 52.

The rotation transmitting mechanism 6 transmits the rotational force of the rotating shaft 51 to the output shaft 32A and is provided leftward of the fan 51A. The circular saw blade 32C rotates by the rotation of the output shaft 32A to which the rotational force of the rotating shaft 51 has been transmitted, thereby enabling the miter saw 1 to perform the cutting operation.

The motor-substrate part 7 includes a circular substrate 71 attached to the right end portion of the stator 53, nine relays 72, and three Hall elements 73. Fig. 4 is a right side view illustrating the motor-substrate part 7. As illustrated in Fig. 4, the circular substrate 71 is substantially circular as viewed from the right. An insertion hole 71a is formed at the center of the circular substrate 71 to penetrate the same in the leftward/rightward direction. The rotating shaft 51 of the motor 5 is inserted in the insertion hole 71a (Fig. 3). Connection wires extend downward from the lower portion of the circular substrate 71. The connection wires connect the control-substrate part 8 with the nine relays 72 and the three Hall elements 73.

As illustrated in Fig. 4, the nine relays 72 are disposed at substantially regular intervals in the circumferential direction on the right side surface of the circular substrate 71. Each relay 72 is a relay switch having two changeover contacts 72A (Fig. 6), or so-called "C contacts", and a changeover signal input portion (not illustrated). As illustrated in Fig. 6, each changeover contact 72A includes a first node 72a, a second node 72b, and a common node 72c. When an OFF signal is inputted to the changeover signal input portion of the relay 72, the first node 72a and the common node 72c in each of the two changeover contacts 72A become connected. When an ON signal is inputted to the changeover signal input portion of the relay 72, the second node 72b and the common node 72c in each of the two changeover contacts 72A become connected.

As illustrated in Fig. 3, the three Hall elements 73 are disposed at intervals of approximately 60° in the circumferential direction on the left side surface of the circular substrate 71. The three Hall elements 73 face the right side surface of the rotor 52.

As illustrated in Fig. 3, the control-substrate part 8 includes a control substrate 81 and six FETs 81A to 81F. The control substrate 81 is disposed below the motor 5 and is substantially rectangular as viewed from the front. The six FETs 81A to 81F, a rectifier circuit 82 (described later), and others are mounted on the front surface of the control substrate 81.

Next, the electrical configuration of the miter saw 1 and the motor 5 will be described in detail while referring to Fig. 5. Fig. 5 is a circuit diagram that includes a block diagram and illustrates the electrical configuration of the miter saw 1.

As illustrated in Fig. 5, the miter saw 1 includes an AC connection terminal part 10, the rectifier circuit 82, a DC connection terminal part 11, an inverter circuit section 83, a current detecting circuit 84, a voltage detecting circuit 85, an operation amount detecting circuit 86, a rotor position detecting circuit 87, a rotation number detecting circuit 88, a relay driving circuit 89, a control signal output circuit 90, and an arithmetic section 91. The inverter circuit section 83, the current detecting circuit 84, the voltage detecting circuit 85, the operation amount detecting circuit 86, the rotor position detecting circuit 87, the rotation number detecting circuit 88, the relay driving circuit 89, the control signal output circuit 90, and the arithmetic section 91 are mounted on the control substrate 81.

The AC connection terminal part 10 is provided at the leading end of the power cord 24 and includes an AC positive terminal 10a and an AC negative terminal 10b. When the power cord 24 is connected to the commercial power source P, the AC positive terminal 10a and the AC negative terminal 10b are connected to the commercial power source P. In the present embodiment, the voltage of the commercial power source P is 100 V (effective value). The AC positive terminal 10a and the AC negative terminal 10b are connected to the inverter circuit section 83 via the rectifier circuit 82. The commercial power source P is an example of an external power source of the present invention. Also, the commercial power source P is an example of an external AC power source of the present invention. The AC connection terminal part 10 is an example of a power source connection part of the present invention.

The rectifier circuit 82 includes a diode bridge circuit and is connected to the AC connection terminal part 10 and the inverter circuit section 83. The rectifier circuit 82 full-wave rectifies the AC voltage inputted from the commercial power source P and outputs the resultant voltage to the inverter circuit section 83.

The DC connection terminal part 11 is provided in the battery attaching portion 33 and includes a DC positive terminal 11a and a DC negative terminal 11b. When the battery attaching portion 33 is connected to the battery pack S, the DC positive terminal 11a and the DC negative terminal 11b are connected to the battery assembly (the plurality of secondary batteries) provided in the battery pack S. The DC positive terminal 11a and the DC negative terminal 11b are connected to the inverter circuit section 83. In the present embodiment, the voltage of the battery assembly in the battery pack S is 20 V (i.e., the battery pack S is a battery pack with a nominal voltage of 18 V). The DC connection terminal part 11 is an example of a power source connection part of the present invention.

The inverter circuit section 83 supplies driving power to the motor 5 and includes the six FETs 81A to 81F connected in a three-phase bridge form. The gate of each of the six FETs 81A to 81F is connected to the control signal output circuit 90, and the drain or the source of each of the six FETs 81A to 81F is connected to the motor 5. Each of the six FETs 81A to 81F performs a switching operation of repeating ON and OFF in accordance with the control signal inputted from the control signal output circuit 90, thereby supplying the inputted DC voltage to the motor 5.

The current detecting circuit 84 detects the current flowing through the motor 5, i.e., the current flowing through the FETs 81A to 81F by acquiring a voltage drop value of a current detecting resistance 84A connected between the rectifier circuit 82 and the inverter circuit section 83. The current detecting circuit 84 outputs, to the arithmetic section 91, a signal (i.e., a current value signal) indicating the current value of the detected current.

The voltage detecting circuit 85 is connected between the rectifier circuit 82 and the inverter circuit section 83. The voltage detecting circuit 85 detects the voltage applied to the motor 5, i.e., the voltage of the driving power source (the commercial power source P or the battery pack S). The voltage detecting circuit 85 outputs, to the arithmetic section 91, a signal (i.e., a voltage value signal) indicating the voltage value of the detected voltage. The voltage detecting circuit 85 is an example of power source voltage detecting means of the present invention.

The operation amount detecting circuit 86 is connected to the trigger switch 31B. The operation amount detecting circuit 86 detects an operation amount (a pulling amount) of the trigger switch 31B and outputs, to the arithmetic section 91, a signal (an operation amount signal) indicating the detected operation amount.

The rotor position detecting circuit 87 detects the rotational position of the rotor 52 on the basis of signals outputted from the Hall elements 73. The rotor position detecting circuit 87 outputs, to both of the rotation number detecting circuit 88 and the arithmetic section 91, a signal (a rotational position signal) indicating the detected rotational position.

The rotation number detecting circuit 88 calculates the rotation number of the rotor 52 on the basis of the rotational position signal outputted from the rotor position detecting circuit 87. The rotation number detecting circuit 88 outputs, to the arithmetic section 91, a signal (a rotation number signal) indicating the calculated rotation number.

The relay driving circuit 89 outputs an ON signal or an OFF signal to each of the nine relays 72 in accordance with a changeover signal (described later) outputted from the arithmetic section 91.

The control signal output circuit 90 is connected to the gates of the respective FETs 81A to 81F and to the arithmetic section 91. The control signal output circuit 90 outputs the control signals for controlling the conduction/non-conduction of the FETs 81A to 81F to the gates of the respective six FETs 81A to 81F on the basis of driving signals (described later) inputted from the arithmetic section 91. Of the FETs 81A to 81F, an FET to which an ON signal has been inputted comes into an ON state to allow current to flow into the motor 5 therethrough, and an FET to which an OFF signal has been inputted comes into an OFF state to prevent current from flowing into the motor 5 therethrough.

The arithmetic section 91 mainly includes a central processing unit (CPU) (not illustrated), a ROM (not illustrated), and a RAM (not illustrated). The CPU performs calculation on the basis of various pieces of data and a processing program used to control the driving of the motor 5. The ROM stores the processing program, the various pieces of data, various threshold values, and others. The RAM temporarily stores data.

The arithmetic section 91 generates driving signals for sequentially switching the FETs 81A to 81F on the basis of the rotational position signal inputted from the rotor position detecting circuit 87 and outputs the generated driving signals to the control signal output circuit 90. As a result, a U-phase winding part 54, a V-phase winding part 55, and a W-phase winding part 56 are sequentially energized, thereby causing the rotor 52 to be rotated in a predetermined rotational direction. In this case, each of the driving signals for controlling the FETs 81D to 81F connected to a negative power source line side is outputted in the form of a pulse width modulation signal (PWM driving signal). The PWM driving signal is a signal in which the ratio of the signal output duration to a switching period (predetermined period of time) of turning on and off the FET can be changed. In other words, the PWM driving signal is a signal in which the duty ratio can be changed.

The arithmetic section 91 controls the start and stop of the motor 5 and the duty ratio on the basis of the operation amount signal outputted from the operation amount detecting circuit 86. Specifically, the arithmetic section 91 sets a target rotation number of the rotor 52 on the basis of the operation amount signal, compares the rotation number of the rotor 52 calculated from the rotation number signal with the target rotation number, and performs a feedback control based on the comparison result. In other words, the arithmetic section 91 performs a constant rotation number control in which the duty ratio is changed such that the rotation number of the rotor 52 is maintained at the target rotation number even when the load changes.

Furthermore, the arithmetic section 91 outputs, to the relay driving circuit 89, a changeover signal for switching the connection form of windings in each phase of the motor 5 on the basis of the voltage value signal outputted from the voltage detecting circuit 85. The connection type of the windings in each phase of the motor 5 will be described later. The arithmetic section 91 is an example of connection form changing means of the present invention, and also is an example of voltage changing means of the present invention.

The motor 5 is a three-phase brushless DC motor that includes the rotor 52 and the stator 53. The rotor 52 has two sets of permanent magnets, and each set includes an N-pole and an S-pole. The three Hall elements 73 are disposed at positions facing the permanent magnets.

The stator 53 includes star-connected three winding parts, namely, the U-phase winding part 54, the V-phase winding part 55, and the W-phase winding part 56 that are star-connected. Specifically, a U-phase neutral point connection node 54a of the U-phase winding part 54, a V-phase neutral point connection node 55a of the V-phase winding part 55, and a W-phase neutral point connection node 56a of the W-phase winding part 56 are connected to a neutral point 5a. In addition, a U-phase power-source-side node 54b of the U-phase winding part 54, a V-phase power-source-side node 55b of the V-phase winding part 55, and a W-phase power-source-side node 56b of the W-phase winding part 56 are connected to the inverter circuit section 83.

As illustrated in Fig. 6, the U-phase winding part 54 includes four U-phase windings 54A to 54D. The four U-phase windings 54A to 54D have the same number of turns and are connected via the changeover contacts 72A of the relays 72. Specifically, the four U-phase windings 54A to 54D are connected via three relays 72, i.e., six changeover contacts 72A. The four U-phase windings 54A to 54D are connected to each other in series when an ON signal is inputted to each of the changeover signal input portions of the three relays 72. On the other hand, the four U-phase windings 54A to 54D are connected to each other in parallel when an OFF signal is inputted to each of the changeover signal input portions of the three relays 72. In other words, the four U-phase windings 54A to 54D are configured to be switchable between the series connection state and the parallel connection state. The four U-phase windings 54A to 54D are lap-wound on the U-phase slot of the stator 53. Fig. 6 is a circuit diagram of the U-phase winding part 54 and illustrates a state in which the U-phase windings 54A to 54D are connected to each other in series.

The connection configuration of the U-phase windings 54A to 54D of the U-phase winding part 54 and the six changeover contacts 72A (the three relays 72) and switching of the connection form in the U-phase winding part 54 will now be described in detail.

As illustrated in Fig. 6, one end of the U-phase winding 54A is connected to the U-phase power-source-side node 54b, while the other end of the U-phase winding 54A is connected to the common node 72c of the changeover contact 72A. Both ends of the U-phase winding 54B are connected to the common nodes 72c of the two changeover contacts 72A different from the changeover contact 72A connected to the U-phase winding 54A. Both ends of the U-phase winding 54C are connected to the common nodes 72c of the two changeover contacts 72A that are different from the changeover contact 72A connected to the U-phase winding 54A and the two changeover contacts 72A connected to the U-phase winding 54B. One end of the U-phase winding 54D is connected to the common node 72c of the remaining changeover contact 72A, while the other end of the U-phase winding 54D is connected to the U-phase neutral point connection node 54a.

The first nodes 72a of the changeover contacts 72A connected to the other ends of the U-phase windings 54A, 54B, and 54C are connected to the U-phase neutral point connection node 54a, and the first nodes 72a of the changeover contacts 72A connected to the one ends of the U-phase windings 54B, 54C, and 54D are connected to the U-phase power-source-side node 54b.

The second node 72b of the changeover contact 72A connected to the other end of the U-phase winding 54A is connected to the second node 72b of the changeover contact 72A connected to the one end of the U-phase winding 54B. The second node 72b of the changeover contact 72A connected to the other end of the U-phase winding 54B is connected to the second node 72b of the changeover contact 72A connected to the one end of the U-phase winding 54C. The second node 72b of the changeover contact 72A connected to the other end of the U-phase winding 54C is connected to the second node 72b of the changeover contact 72A connected to the one end of the U-phase winding 54D.

As illustrated in Figs. 7 and 8, similarly to the U-phase winding part 54, the V-phase winding part 55 includes four V-phase windings 55A to 55D, and the W-phase winding part 56 includes four W-phase windings 56A to 56D. The V-phase windings 55A to 55D are connected to each other via three relays 72 so as to be switchable between the series connection and the parallel connection. The W-phase windings 56A to 56D are connected to each other via three relays 72 so as to be switchable between the series connection and the parallel connection. The V-phase windings 55A to 55D are lap-wound on the V-phase slot, and the W-phase windings 56A to 56D are lap-wound on the W-phase slot. Figs. 7 and 8 are circuit diagrams illustrating the connection state of the U-phase windings 54A to 54D, the V-phase windings 55A to 55D, and the W-phase windings 56A to 56D. Fig. 7 illustrates a state in which the windings within each phase are connected to each other in series, and Fig. 8 illustrates a state in which the windings within each phase are connected to each other in parallel. The connection configuration within the U-phase winding part 54, the connection configuration within the V-phase winding part 55, and the connection configuration within the W-phase winding part 56 are identical to one another. Thus, descriptions of the connection configuration within the V-phase winding part 55 and the connection configuration within the W-phase winding part 56 will be omitted.

With the above-described connection configurations within the U-phase winding part 54, within the V-phase winding part 55, and within the W-phase winding part 56, the connection form of the windings within each phase can be switched. Specifically, by outputting an ON signal to the changeover signal input portion of each of the nine relays 72, the four winding in each phase can be brought into a series connection state, that is, the U-phase windings 54A to 54D, the V-phase windings 55A to 55D, and the W-phase windings 56A to 56D can be brought into their series connection state within the respective phases, as illustrated in Fig. 7. In addition, by outputting an OFF signal to the changeover signal input portion of each of the nine relays 72, the four winding in each phase can be brought into a parallel connection state, that is, the U-phase windings 54A to 54D, the V-phase windings 55A to 55D, and the W-phase windings 56A to 56D can be brought into their parallel connection state within the respective phases, as illustrated in Fig. 8. In other words, by switching the signal outputted to the changeover signal input portion of each of the nine relays 72 between an ON signal and an OFF signal, the connection form in each phase can be switched between the series connection (Fig. 7) and the parallel connection (Fig. 8). The U-phase windings 54A to 54D, the V-phase windings 55A to 55D, and the W-phase windings 56A to 56D are an example of a plurality of windings of the present invention.

Next, the drive control to the miter saw 1 by the arithmetic section 91 will be described. For the purpose of suppressing variations in the motor characteristics of the motor 5 between when the commercial power source P is used as the driving power source of the motor 5 and when the battery pack S is used as the driving power source, the arithmetic section 91 performs a control of switching the connection form in each phase, i.e., in each of the U-phase winding part 54, the V-phase winding part 55, and the W-phase winding part 56.

The motor characteristics, such as the motor current-torque characteristic, the motor current-rotation number characteristic, and the motor current-output characteristic, depend on the sum total of the magnetic forces produced by the windings wound on one slot (in the present embodiment, the total of the magnetic forces produced by the four windings that are lap-wound on one slot). In addition, the magnetic force produced by one winding depends on the current flowing in the one winding. Furthermore, when the number of turns is constant, the current that flows in the one winding depends on the voltage applied between both ends of the one winding.

Therefore, in the present embodiment, by switching the connection form of the windings within each phase between the series connection and the parallel connection in accordance with the voltage of the driving power source, the voltage applied across both ends of one winding when the motor 5 is driven with the commercial power source P (commercial-power-driven both-end voltage) and the voltage applied across both ends of the one winding when the motor 5 is driven with the battery pack S (battery-driven both-end voltage) are brought close to each other, thereby suppressing variations in the motor characteristics between the two driving power sources. Furthermore, in the present embodiment, after the connection form is switched (changed), a duty control is performed to make a fine adjustment of bringing the commercial-power-driven both-end voltage and the battery-driven both-end voltage further closer to each other, thereby further suppressing the variations in the motor characteristic between the two driving power sources.

Specifically, the arithmetic section 91 brings the four windings in each phase, i.e., the four windings in each of the U-phase winding part 54, the V-phase winding part 55, and the W-phase winding part 56 into the series connection state when the motor 5 is driven with the commercial power source P. On the other hand, the arithmetic section 91 brings the four windings in each phase into the parallel connection state when the motor 5 is driven with the battery pack S. Thereafter, when the motor 5 is driven with the commercial power source P, the arithmetic section 91 further changes the voltage (effective value) of the commercial power source P by performing the duty control to thereby make a fine adjustment of bringing the commercial-power-driven both-end voltage closer to the battery-driven both-end voltage.

The commercial-power-driven both-end voltage and the battery-driven both-end voltage according to the present embodiment will now be described. In the following description, a driving state in which the operation amount of the trigger switch 31B is maximum and both the U-phase winding part 54 and the V-phase winding part 55 are energized under no load will be described as an example.

In the present embodiment, when the motor is driven with the commercial power source P, the voltage of the commercial power source P, or 100 V (effective value), is applied to a circuit in which the series-connected four U-phase windings 54A to 54D and the series-connected four V-phase windings 55A to 55D are connected in series (eight windings with the same number of turns). Accordingly, the commercial-power-driven both-end voltage, i.e., the effective value of the voltage applied between both ends of one winding when the motor 5 is driven with the commercial power source P is approximately 12.5 V.

Meanwhile, when the motor 5 is driven with the battery pack S, the voltage of the battery pack S, or 20 V, is applied to a circuit in which the parallel-connected four U-phase windings 54A to 54D and the parallel-connected V-phase windings 55A to 55D are connected in series. Accordingly, the battery-driven both-end voltage, i.e., the voltage applied between both ends of one winding when the motor 5 is driven with the battery pack S is approximately 10.0 V. In this manner, by switching the connection form in accordance with the driving power source, the commercial-power-driven both-end voltage becomes approximately 12.5 V, and the battery-driven both-end voltage becomes approximately 10.0 V. Thus, the voltages applied between both ends of one winding can be brought close to each other between the two driving power sources. As a result, the variations in the motor characteristics of the motor 5 between the two driving power sources can be suppressed.

As described above, in a case where the motor 5 is driven with the battery pack S, the state where the duty control is not performed and the operation amount of the trigger switch 31B is maximum is equal to the state where the motor 5 is driven with the duty ratio of 100% under the duty control. Therefore, in the present embodiment, the duty control is performed as follows. When the motor 5 is driven with no load and the operation amount of the trigger switch 31B is maximum, the duty ratio is set to 100% and the proportional relationship is established between the duty ratio and the operation amount. For example, the duty control in which the duty ratio is set to 50% when the operation amount is half of the maximum is performed.

Furthermore, when the motor 5 is driven with the commercial power source P, the arithmetic section 91 switches the connection form to the series connection to cause the commercial-power-driven both-end voltage to be approximately 12.5 V. After then, the arithmetic section 91 performs the duty control to reduce the voltage applied to the motor 5 from the effective value of 100 V to approximately 80 V, thereby causing the effective value of the commercial-power-driven both-end voltage in each of the U-phase winding part 54 and the V-phase winding part 55 to be approximately 10.0 V (peak voltage is 12.5 V). In this way, the commercial-power-driven both-end voltage and the battery-driven both-end voltage can be substantially equalized, and thus the variations in the motor characteristics between the two driving power sources can be further suppressed.

As described above, since the fine adjustment for further suppressing the variations in the motor characteristics between the two driving power sources is performed, that is, since the duty ratio is reduced when the motor 5 is driven with the commercial power source P, the duty ratio is 80% when the operation amount of the trigger switch 31B is maximum. Therefore, in the present embodiment, the duty control is performed as follows when the motor 5 is driven with the commercial power source P. When the motor 5 is driven with no load and the operation amount of the trigger switch 31B is maximum, the duty ratio is set to 80%, and the proportional relationship is established between the operation amount and the duty ratio. For example, the duty control in which the duty ratio is set to 40% when the operation amount is half of the maximum is performed.

In this manner, in the present embodiment, provided that the operation amount of the trigger switch 31B when the motor 5 is driven with the commercial power source P is equal to the operation amount of the trigger switch 31B when the motor 5 is driven with the battery pack S, the commercial-power-driven both-end voltage is equal to the battery-driven both-end voltage. In other words, provided that the operation amount of the trigger switch 31B when the motor 5 is driven with the commercial power source P is equal to the operation amount of the trigger switch 31B when the motor 5 is driven with the battery pack S, the same torque or the same rotation number is outputted regardless of which driving power source is used. Therefore, the operability does not differ between the two driving power sources, and thus improved workability can be obtained.

In addition, in the above-described configuration in which the variations in the motor characteristics between the two driving power sources is suppressed by switching the connection form, the peak value of the current that flows through the inverter circuit section 83 and the motor 5 can be reduced. Thus, the size of the inverter circuit section 83 and the motor 5 can be reduced. Of the AC/DC power tools, for example, a conventional power tool is known in which the effective value of the commercial power source is lowered to a voltage which is approximately equal to the voltage of a battery pack only with the use of duty control in order to suppress variations in the motor characteristics between two driving power sources. However, in the case of such a conventional power tool, the peak value is much larger than the peak value in the present embodiment, which leads to an increase in the size of the inverter circuit section and the motor.

Figs. 9A and 9B illustrate the peak value of the current that flows through the inverter circuit section 83 and the motor 5 according to the present embodiment when the input power to the motor 5 is 800 W. Fig. 9A illustrates a case in which the motor 5 is driven with the commercial power source P (effective value of 100 V), and Fig. 9B illustrates a case in which the motor 5 is driven with the battery pack S (20 V). Figs. 10A and 10B illustrate the peak value of the current that flows through an inverter circuit section and a motor in a conventional power tool when the input power to the motor is 800 W. Fig. 10A illustrates a case in which the motor is driven with a commercial power source (effective value of 100 V), and Fig. 10B illustrates a case in which the motor is driven with a battery pack (20 V). For simplifying the following description, Fig. 9A illustrates a state in which the duty control after switching (changing) the connection form is not performed.

As illustrated in Fig. 9B, the peak value of the current that flows through the inverter circuit section 83 and the motor 5 when the miter saw 1 according to the present embodiment is driven with the battery pack S (20 V) is 40 A. As illustrated in Fig. 10B, the peak value of the current that flows through the inverter circuit section and the motor when the conventional power tool is driven with the battery pack (20 V) is also 40 A. In this manner, the peak value does not differ between the two power tools when driven with the battery packs (20 V).

As illustrated in Fig. 9A, the effective value and the peak value of the current that flows through the inverter circuit section 83 and the motor 5 when the miter saw 1 according to the present embodiment is driven with the commercial power source P (effective value of 100 V) are both 8 A. On the other hand, in the conventional power tool, when the effective value of the commercial power source is stepped down from 100 V to approximately 20 V by setting the duty ratio to approximately 20% in order to bring the motor characteristics close to the motor characteristics that are obtained when driven with the battery pack and the motor is driven in this state, the effective value of the current that flows through the inverter circuit section and the motor is 40 A and the peak value of the current is 200 A. In this manner, when a comparison is made at the same input power, the peak value in the miter saw 1 according to the present embodiment is approximately 1/12.5 of the peak value of the current that flows through the inverter circuit section and the motor in the power tool that uses only the conventional duty control. That is, in the miter saw 1 according to the present embodiment, the peak value of the current that flows through the inverter circuit section 83 and the motor 5 can be greatly reduced, as compared with the conventional power tool. Note that, even in a case in which the miter saw 1 according to the present embodiment is driven with the commercial power source P (effective value of 100 V) and the duty control is performed after the connection type is changed, the peak value of the current that flows through the inverter circuit section 83 and the motor 5 is greatly reduced, as compared with the conventional power tool described above.

Furthermore, there is known a conventional power tool having a configuration in which the voltage of a battery pack is stepped up to a voltage that is approximately equal to the voltage of the commercial power source in order to suppress variations in the motor characteristics between the two driving power sources. However, typically, a large-sized step-up circuit needs to be provided in order to step up the voltage of the battery pack, which leads to an increase in the size of the power tool. In this respect, in the present embodiment, the variations in the motor characteristic between the two driving power sources can be suppressed without providing the large-sized step-up circuit, and thus the increase in the size of the power tool can be suppressed.

Next, the drive control performed by the arithmetic section 91 will be described with reference to Fig. 11. Fig. 11 is a flowchart illustrating the drive control performed by the arithmetic section 91.

As illustrated in Fig. 11, in step 101, the arithmetic section 91 starts the drive control. Upon starting the drive control, in step 102, the arithmetic section 91 determines whether the driving power source (power source voltage) is 100 V. In other words, the arithmetic section 91 determines whether the commercial power source P is connected to the AC connection terminal part 10. The determination of the voltage of the driving power source is made on the basis of the voltage value signal outputted from the voltage detecting circuit 85.

When the arithmetic section 91 determines in step 102 that the driving power source is 100 V, that is, when the arithmetic section 91 determines that the commercial power source P is connected to the AC connection terminal part 10 (Yes in step 101), in step 102 the arithmetic section 91 outputs, to the relay driving circuit 89, a changeover signal for switching the connection form within each phase (i.e., for switching the connection form of the U-phase windings 54A to 54D, the connection form of the V-phase windings 55A to 55D, and the connection form of the W-phase windings 56A to 56D) to the series connection. The relay driving circuit 89 to which the changeover signal has been inputted outputs an ON signal to the changeover signal input portion of each of the nine relays 72, so that the four windings in each phase are connected to each other in series. Incidentally, the miter saw 1 includes a changeover circuit (not illustrated) that can selectively switch the driving power source to be inputted to the inverter circuit section 83. When the arithmetic section 91 determines that the driving power source is 100 V, the arithmetic section 91 controls the changeover circuit to switch the driving power source to be inputted to the inverter circuit section 83 to the commercial power source P.

On the other hand, when the driving power source is not 100 V (No in step 102), in step 104 the arithmetic section 91 determines whether the driving power source is 20 V. In other words, the arithmetic section 91 determines whether the battery pack S is connected to the DC connection terminal part 11. Similarly to step 102, the determination of the voltage of the driving power source is made on the basis of the voltage value signal outputted from the voltage detecting circuit 85.

When the arithmetic section 91 determines in step 104 that the driving power source is 20 V, that is, when the arithmetic section 91 determines that the battery pack S is connected to the DC connection terminal part 11 (Yes in step 104), in step 105 the arithmetic section 91 outputs, to the relay driving circuit 89, a changeover signal for switching the connection type within each phase (i.e., for switching the connection form of the U-phase windings 54A to 54D, the connection form of the V-phase windings 55A to 55D, and the connection form of the W-phase windings 56A to 56D) to the parallel connection. The relay driving circuit 89 to which the changeover signal has been inputted outputs an OFF signal to the changeover signal input portion of each of the nine relays 72, so that the four windings in each phase are connected to each other in parallel. In this case, the arithmetic section 91 controls the changeover circuit to switch the driving power source to be inputted to the inverter circuit section 83 to the battery pack S.

On the other hand, when the driving power source is not 20 V (No in step 104), the arithmetic section 91 returns to step 102. In other words, the arithmetic section 91 enters a standby state in which steps 102 and 104 are repeated until either of the power sources is connected.

After the four windings in each phase are connected in series in step 103 or after the four windings are connected in parallel in step 105, in step 106 the arithmetic section 91 determines whether the trigger switch 31B has been turned on. The determination as to whether the trigger switch 31B has been turned on is made on the basis of whether the operation amount signal is being outputted from the operation amount detecting circuit 86. When the arithmetic section 91 determines that the trigger switch 31B has not been turned on (No in step 106), the arithmetic section 91 returns to step 102 and enters a standby state in which the processing in steps 102 to 105 is repeated until the trigger switch 31B is turned on.

When the arithmetic section 91 determines that the trigger switch 31B has been turned on (Yes in step 106), in step 107, the arithmetic section 91 determines the duty ratio in accordance with the driving power source to perform a fine adjustment of the motor characteristics. In the present embodiment, in a state where the motor 5 is driven under no load, the duty ratio is set to 100% when the driving power source is 20 V and the duty ratio is set to 80% when the driving power source is 100 V. Accordingly, the motor characteristics between the two driving power sources can be substantially equalized.

After the duty ratio corresponding to the driving power source is determined in step 107, in step 108 the arithmetic section 91 determines the duty ratio in accordance with the operation amount of the trigger switch 31B. In other words, the arithmetic section 91 determines the duty ratio for constant rotation number control. More specifically, in the present embodiment, the rotation number control is performed in addition to the duty control (fine adjustment) of equalizing the motor characteristics. Thus, in step 107, the arithmetic section 91 determines the duty ratio for the constant rotation number control in which the rotation number is controlled so as to approach the target rotation number corresponding to the operation amount signal.

After the duty ratio is determined in steps 107 and 108, in step 109 the arithmetic section 91 starts driving the motor 5 at the determined duty ratio. The motor 5 is driven by the control signal output circuit 90 outputting control signals to the FETs 81A to 81F on the basis of the driving signals outputted from the arithmetic section 91. The FETs 81A to 81F are sequentially switched on by the control signals. Of the three winding parts, namely, the U-phase winding part 54, the V-phase winding part 55, and the W-phase winding part 56, the winding parts to be energized are sequentially switched by the control signals. By this switching control, the rotor 52 is rotated in a predetermined rotational direction, so that the rotational force is transmitted to the output shaft 32A via the rotation transmitting mechanism 6, thereby causing the circular saw blade 32C to rotate.

After starting driving the motor 5, in step 110 the arithmetic section 91 determines whether the trigger switch 31B has been turned off. When the trigger switch 31B has not been turned off (NO in step 110), the arithmetic section 91 continues to drive the motor 5 until the trigger switch 31B is turned off, while repeating steps 109 and 110.

On the other hand, when the arithmetic section 91 determines that the trigger switch 31B has been turned off (Yes in step 110), in step 111 the arithmetic section 91 stops driving the motor 5. After stopping driving the motor 5, the arithmetic section 91 terminates the drive control to the motor 5 in step 112.

As stated above, the miter saw 1 according to the first embodiment of the present invention includes the arithmetic section 91 configured to perform, on the basis of the voltage of the driving power source, the control of changing the connection form between the U-phase windings 54A to 54D, the connection form between the V-phase windings 55A to 55D, and the connection form between the W-phase windings 56A to 56D. Thus, the connection form between the U-phase windings 54A to 54D, the connection form between the V-phase windings 55A to 55D, and the connection form between the W-phase windings 56A to 56D can be changed (switched) in accordance with the voltage of the driving power source. In other words, an appropriate connection form for obtaining predetermined motor characteristics can be selected in accordance with the voltage of the driving power source. Accordingly, the variations in the motor characteristics between the driving power sources with different voltages (in the present embodiment, between AC 100 V and DC 20 V) can be suppressed. In addition, with the above configuration, a stator on which stator windings corresponding to each of the plurality of driving power sources are wound need not be separately provided for the purpose of suppressing the variations in the motor characteristics between the plurality of driving power sources with different voltages. Therefore, an increase in the size of the miter saw 1 can be suppressed.

Further, since the miter saw 1 includes the AC connection terminal part 10 that can be connected to the commercial power source P and the DC connection terminal part 11 that can be connected to the battery pack S, the commercial power source P and the battery pack S can be used as the driving power sources. Accordingly, even in a working location where the commercial power source P is not available, the miter saw 1 can perform the operation by virtue of using the battery pack S. Therefore, workability of the power tool can be improved.

In the miter saw 1, the motor 5 is a three-phase motor, each of the three phases includes the four windings (the U-phase windings 54A to 54D, the V-phase windings 55A to 55D, and the W-phase windings 56A to 56D), and the arithmetic section 91 changes the connection form of the windings within each phase. Accordingly, the variations in the motor characteristics between the driving power sources with different voltages can be suppressed in the three-phase motor.

The arithmetic section 91 of the miter saw 1 according to the present embodiment is configured to change the connection form of the windings between the series connection and the parallel connection. Thus, the variations in the motor characteristics between the two driving power sources (the commercial power source P and the battery pack S) with different voltages can be suppressed.

In the present embodiment, the arithmetic section 91 can make a fine adjustment in the motor characteristics by changing, after changing (switching) the connection form, the voltage that is based on the driving power source (i.e., changes the voltage outputted from the inverter circuit section 83) and applying the changed voltage to the motor 5. Thus, the variations in the motor characteristics between the driving power sources with different voltages can be further suppressed.

Moreover, the arithmetic section 91 of the miter saw 1 can change the voltage that is based on the driving power source (i.e., change the voltage outputted from the inverter circuit section 83) by changing the duty ratio. With this configuration, the voltage based on the driving power source can be changed by a simple configuration.

Next, a miter saw 201 as an example of a power tool according to a second embodiment of the present invention will be described with reference to Figs. 12 to 14. In the following description, parts and configurations that are identical to those of the miter saw 1 are designated with the same reference numerals to avoid duplicating descriptions, and only the configurations that differ from those of the miter saw 1 will be described.

As illustrated in Fig. 12, the miter saw 201 according to the second embodiment includes a motor-substrate part 207. The DC connection terminal part 11 of the miter saw 201 can be selectively connected to one of the battery pack S (20 V) and a battery pack D (40 V, i.e., the battery pack D is a battery pack with a nominal voltage of 36 V) (Fig. 1). The miter saw 201 does not include the AC connection terminal part 10. Fig. 12 is a right side view illustrating the motor-substrate part 207. The battery pack D is an example of an external power source of the present invention, and is also an example of an external DC power source of the present invention.

The motor-substrate part 207 includes three relays 72. The three relays 72 are disposed at intervals of approximately 120° in the circumferential direction on the right side surface of the circular substrate 71.

As illustrated in Figs. 13 and 14, the miter saw 201 includes star-connected three winding parts, namely, a U-phase winding part 254, a V-phase winding part 255, and a W-phase winding part 256 that are star-connected. The U-phase winding part 254 includes two U-phase windings, namely, U-phase windings 254A and 254B. The V-phase winding part 255 includes two V-phase windings, namely, V-phase windings 255A and 255B. The W-phase winding part 256 includes two W-phase windings, namely, W-phase windings 256A and 256B. Figs. 13 and 14 are circuit diagrams illustrating the connection state of the U-phase windings 254A and 254B, the V-phase windings 255A and 255B, and the W-phase windings 256A and 256B. Fig. 13 illustrates a state in which the windings in each phase are connected to each other in series. Fig. 14 illustrates a state in which the windings in each phase are connected to each other in parallel.

The two U-phase windings 254A and 254B have the same number of turns and are connected via the changeover contacts 72A of the relay 72. Specifically, the two U-phase windings 254A and 254B are connected to each other via one relay 72, namely, two changeover contacts 72A. The two U-phase windings 254A and 254B are connected to each other in series when an ON signal is inputted to the changeover signal input portion of the one relay 72, while the two U-phase windings 254A and 254B are connected to each other in parallel when an OFF signal is inputted. In other words, the two U-phase windings 254A and 254B are configured to be switchable between the series connection state and the parallel connection state. The two U-phase windings 254A and 254B are lap-wound on the U-phase slot of the stator 53.

As illustrated in Figs. 12 and 13, similarly to the U-phase winding part 254, the V-phase winding part 255 includes the two V-phase windings 255A and 255B, and the W-phase winding part 256 includes the two W-phase windings 256A and 256B. The V-phase windings 255A and 255B are connected via one relay 72 so as to be switchable between the series connection and the parallel connection, and the W-phase windings 256A and 256B are connected via one relay 72 so as to be switchable between the series connection and the parallel connection.

The V-phase windings 255A and 255B are lap-wound on the V-phase slot, and the W-phase windings 256A and 256B are lap-wound on the W-phase slot. The connection configuration within the U-phase winding part 254, the connection configuration within the V-phase winding part 255, and the connection configuration within the W-phase winding part 256 are identical to one another. Thus, descriptions of the connection configuration within the V-phase winding part 255 and the connection configuration within the W-phase winding part 256 will be omitted.

With the connection configurations within the U-phase winding part 254, within the V-phase winding part 255, and within the W-phase winding part 256 as described above, the connection form of the windings in each phase can be switched.

Specifically, by outputting an ON signal to the changeover signal input portion of each of the three relays 72, the two windings in each phase can be brought into the series connection state, that is, the U-phase windings 254A and 254B can be brought into the series connection state, the V-phase windings 255A and 255B can be brought into the series connection state, and the W-phase windings 256A and 256B can be brought into the series connection state, as illustrated in Fig. 13. On the other hand, by outputting an OFF signal to the changeover signal input portion of each of the three relays 72, the two windings in each phase can be brought into the parallel connection state, i.e., the U-phase windings 254A and 254B can be brought into the parallel connection state, the V-phase windings 255A and 255B can be brought into the parallel connection state, and the W-phase windings 256A and 256B can be brought into the parallel connection state, as illustrated in Fig. 14. Stated differently, by switching the signal outputted to the changeover signal input portion of each of the three relays 72 between an ON signal and an OFF signal, the connection form within each phase can be switched between the series connection (Fig. 13) and the parallel connection (Fig. 14).

The arithmetic section 91 of the miter saw 201 according to the second embodiment brings the two windings in each phase (i.e., in each of the U-phase winding part 254, the V-phase winding part 255, and the W-phase winding part 256) into the series connection state when the motor 5 is driven with the battery pack D (40 V). On the other hand, the arithmetic section 91 of the miter saw 201 brings the two windings in each phase into the parallel-connection state when the motor 5 is driven with the battery pack S.

The voltage applied between both ends of each of the U-phase winding 254A, the U-phase winding 254B, the V-phase winding 255A, the V-phase winding 255B, the W-phase winding 256A, and the W-phase winding 256B according to the second embodiment will now be described. In the following description, a driving state in which the operation amount of the trigger switch 31B is maximum and both the U-phase winding part 254 and the V-phase winding part 255 are energized under no load will be described as an example.

In the second embodiment, when the motor 5 is driven with the battery pack D, the voltage of the battery pack D, or 40 V, is applied to a circuit in which the U-phase winding 254A, the U-phase winding 254B, the V-phase winding 255A, and the V-phase winding 255B (i.e., the four windings with the same number of turns) that are connected in series, as illustrated in Fig. 13. Thus, the voltage between the both ends of each winding when the motor 5 is driven with the battery pack D is approximately 10.0 V.

On the other hand, when the motor 5 is driven with the battery pack S, the voltage of the battery pack S, or 20 V, is applied to a circuit in which the parallel-connected two U-phase windings 254A and 254B and the parallel-connected two V-phase windings 255A and 255B are connected in series, as illustrated in Fig. 14. Thus, the voltage between the both ends of each winding when the motor 5 is driven with the battery pack S is approximately 10.0 V.

In this way, according to the second embodiment, the voltage (approximately 10.0 V) between the both ends of each winding when the motor 5 is driven with the battery pack D (40 V) can be made substantially equal to the voltage (approximately 10.0 V) between the both ends of each winding when the motor 5 is driven with the battery pack S (20 V). In other words, by switching the connection form in accordance with the voltage (20 V or 40 V) of the battery pack connected to the DC connection terminal part 11, the voltage between the both ends of each winding can be substantially equalized between the two driving power sources, and thus variations in the motor characteristics of the motor 5 between the two driving power sources can be suppressed. Note that parts, configurations, and control other than the above-described parts, the above-described configurations, and the above-described control are identical to those of the miter saw 1 according to the first embodiment. The identical parts, configurations, and control provide advantageous effects identical to those of the identical parts, configurations, and control of the miter saw 1.

Next, a miter saw 301 as an example of a power tool according to a third embodiment of the present invention will be described with reference to Figs. 15 to 17. In the following description, parts and configurations that are identical to those of the miter saw 1 are designated with the same reference numerals to avoid duplicating descriptions, and only the configurations that differ from those of the miter saw 1 will be described.

The AC connection terminal part 10 of the miter saw 301 according to the third embodiment can be connected to the commercial power source P (effective value of 100 V), and the DC connection terminal part 11 can be selectively connected to one of the battery pack S (20 V) and the battery pack D (40 V) (Fig. 1).

As illustrated in Fig. 15 to Fig. 17, the miter saw 201 includes star-connected three winding parts, namely, a U-phase winding part 354, a V-phase winding part 355, and a W-phase winding part 356 that are star-connected. Fig. 15 to Fig. 17 are circuit diagrams illustrating the connection state of U-phase windings 354A to 354D, V-phase windings 355A to 355D, and W-phase windings 356A to 356D. Fig. 15 illustrates a state in which the windings within each phase are connected to each other in series. Fig. 16 illustrates a state in which the windings within each phase are connected to each other in series-parallel. Fig. 17 illustrates a state in which the windings within each phase are connected to each other in parallel.

As illustrated in Fig. 15, the U-phase winding part 354 is a modification of the U-phase winding part 54 according to the first embodiment, in which the connection configuration of the U-phase windings 54A to 54D is modified. The four U-phase windings 354A to 354D of the U-phase winding part 354 of the miter saw 301 according to the third embodiment are connected to each other via four relays 72 (i.e., via eight changeover contacts 72A). Specifically, the connection configuration of the U-phase windings 354A to 354D of the U-phase winding part 354 is identical to a connection configuration in which a changeover contact 72A is additionally provided between the first node 72a of the changeover contact 72A connected to the one end of the U-phase winding 54B of the U-phase winding part 54 and the first node 72a of the changeover contact 72A connected to the one end of the U-phase winding 54C, another changeover contact 72A is additionally provided between the first node 72a of the changeover contact 72A connected to the other end of the U-phase winding 54B and the first node 72a of the changeover contact 72A connected to the other end of the U-phase winding 54C, and first nodes 72a of the two additionally provided changeover contacts 72A are connected to each other.

As illustrated in Figs. 15 and 17, similarly to the U-phase winding part 354, the V-phase winding part 355 includes the four V-phase windings 355A to 355D, and the W-phase winding part 356 includes the four W-phase windings 356A to 356D. The connection configuration within the U-phase winding part 354, the connection configuration within the V-phase winding part 355, and the connection configuration within the W-phase winding part 356 are identical to one another. Thus, the descriptions of the connection configuration within the V-phase winding part 355 and the connection configuration within the W-phase winding part 356 will be omitted.

With the connection configurations within the U-phase winding part 354, within the V-phase winding part 355, and within the W-phase winding part 356 as described above, the connection form of the windings within each phase can be switched among the series connection, the series-parallel connection, and the parallel connection.

Specifically, the connection between the windings within each of the U-phase winding part 354, the V-phase winding part 355, and the W-phase winding part 356 can be brought into the series connection state by outputting an ON signal to the changeover signal input portion of each of the twelve relays 72 (Fig. 15). The connection between the windings within each of the three winding parts can be brought into the series-parallel connection state by outputting an OFF signal to the changeover signal input portion of each of the twelve relays 72 (Fig. 16). The connection between the windings within each of the three winding parts can be brought into the parallel connection state by outputting an ON signal to each of three of the twelve relays 72 and an OFF signal to each of the remaining nine relays 72 (Fig. 17), the three relays 72 each having the two additionally provided changeover contacts 72A. In other words, by switching the signal outputted to the changeover signal input portion of each of the twelve relays 72 between an ON signal and an OFF signal, the connection form within each phase can be switched among the series connection (Fig. 15), the series-parallel connection (Fig. 16), and the parallel connection (Fig. 17).

The arithmetic section 91 of the miter saw 301 according to the third embodiment switches the connection form of the four windings in each phase to the series connection state when the driving power source of the motor 5 is the commercial power source P (effective value of 100 V), to the series-parallel connection state when the driving power source is the battery pack D (40 V), and to the parallel connection state when the driving power source is the battery pack S (20 V).

The voltage applied between both ends of each winding of the U-phase windings 354A to 354D of the U-phase winding part 354, the V-phase windings 355A to 355D of the V-phase winding part 355, and the W-phase windings 356A to 356D of the W-phase winding part 356 according to the third embodiment will now be described. In the following description, a driving state in which the operation amount of the trigger switch 31B is maximum and both the U-phase winding part 354 and the V-phase winding part 355 are energized under no load will be described as an example.

In the third embodiment, as illustrated in Fig. 15, when the motor 5 is driven with the commercial power source P, the voltage of the commercial power source P, or the effective value of 100 V, is applied to a circuit in which the U-phase windings 354A to 354D and the V-phase windings 355A to 355D are connected in series, namely, the serially connected eight windings with the same number of turns. Thus, the effective value of the voltage between the both ends of one winding when the motor 5 is driven with the commercial power source P is approximately 12.5 V.

As illustrated in Fig. 16, when the motor 5 is driven with the battery pack D, the voltage of the battery pack D, or 40 V, is applied to a circuit in which the parallel-connected two U-phase windings 354A and 354B, the parallel-connected two U-phase windings 354C and 354D, the parallel-connected two V-phase windings 355A and 355B, and the parallel-connected two V-phase windings 355C and 355D are connected in series. Thus, the voltage between the both ends of one winding when the motor 5 is driven with the battery pack D is approximately 10.0 V.

Furthermore, as illustrated in Fig. 17, when the motor 5 is driven with the battery pack S, the voltage of the battery pack S, or 20 V, is applied to a circuit in which the parallel-connected four U-phase windings 354A to 354D and the parallel-connected four V-phase windings 355A to 355D are connected in series. Thus, the voltage between the both ends of one winding when the motor 5 is driven with the battery pack S is approximately 10.0 V.

In this way, according to the third embodiment, the voltage (approximately 12.5 V) applied between the both ends of one winding when the motor 5 is driven with the commercial power source P (effective value of 100 V), the voltage (approximately 10.0 V) applied between the both ends of one winding when the motor 5 is driven with the battery pack D (40 V), and the voltage (approximately 10.0 V) applied between the both ends of one winding when the motor 5 is driven with the battery pack S (20 V) can be brought close to one another. In other words, by switching the connection form in accordance with the three driving power sources (i.e., the commercial power source P connected to the AC connection terminal part 10, the battery pack S connected to the DC connection terminal part 11, and the battery pack D connected to the DC connection terminal part 11), the voltage applied between the both ends of one winding can be brought close to one another among the three driving power sources, and variations in the motor characteristics of the motor 5 among the three driving power sources can be suppressed. Parts, configurations, and control other than the above-described parts, the above-described configurations, and the above-described control are identical to those of the miter saw 1 according to the first embodiment. The identical parts, configurations, and control provide advantageous effects identical to those of the identical parts, configurations, and control of the miter saw 1.

As described above, the arithmetic section 91 of the miter saw 301 according to the third embodiment of the present invention is configured to change the connection form of the windings among the series connection, the parallel connection, and the series-parallel connection. Accordingly, the variations in the motor characteristics among the three driving power sources with different voltages (the commercial power source P, the battery pack S, and the battery pack D) can be suppressed.

Although a case in which the present invention is applied to a miter saw has been described as an example in the above embodiments, the present invention is not limited to this example. Various modifications and improvements can be made within the scope set forth in the claims. For example, the motor 5 of the miter saw 1 according to the first embodiment of the present invention includes three slots, namely, the U-phase slot, the V-phase slot, and the W-phase slot, and four windings are lap-wound on each phase slot. Alternatively, while the connection configuration of the four windings in each phase is kept the same as that in the miter saw 1, twelve slots (four U-phase slots, four V-phase slots, and four W-phase slots) may be provided in the motor 5, and one winding may be wound around each of the twelve slots. In this case as well, advantageous effects identical to those of the miter saw 1 can be obtained. In addition, although the relays 72 are provided on the motor-substrate part 7 (circular substrate 71), the relays 72 may instead be provided on the control-substrate part 8.

### [Reference Signs List]

1, 201, 301: miter saw, 2: base portion, 3: cutting portion, 4: cutting-portion-supporting portion, 5: motor, 6: rotation transmitting mechanism, 7: motor-substrate part, 8: control-substrate part, 10: AC connection terminal part, 11: DC connection terminal part, 21: base, 22: turntable, 24: power cord, 31B: trigger switch, 32A: output shaft, 32C: circular saw blade, 33: battery attaching portion, 51A: fan, 52: rotor, 53: stator, 54, 254, 354: U-phase winding part, 54A-54D, 254A, 254B: U-phase winding, 55, 255, 355: V-phase winding part, 55A-55D, 255A, 255B: V-phase winding, 56, 256, 356: W-phase winding part, 56A-56D, 256A, 256B: W-phase winding, 72: relay, 73: Hall element, 85: voltage detecting circuit, 89: relay driving circuit, 91: arithmetic section, S, D: battery pack, W: workpiece

## Claims

1. A power tool comprising:
a motor including a stator on which a plurality of windings are wound and a rotor rotatable relative to the stator;
an output unit driven by rotation of the rotor;
a power source connection part connectable to an external power source serving as a driving power source of the motor;
power source voltage detecting means configured to perform detecting a voltage of the external power source connected to the power source connection part; and
connection form changing means configured to perform changing a connection form of the plurality of windings on the basis of the voltage of the external power source.

2. The power tool according to claim 1, wherein the power source connection part includes:
an AC connection terminal part connectable to an external AC power source; and
a DC connection terminal part connectable to an external DC power source.

3. The power tool according to claim 2, wherein the connection form changing means performs the changing the connection form of the plurality of windings on the basis of a voltage of the external AC power source connected to the AC connection terminal part.

4. The power tool according to claim 2, wherein the connection form changing means performs the changing the connection form of the plurality of windings on the basis of a voltage of the external DC power source connected to the DC connection terminal part.

5. The power tool according to any one of claims 1 to 4, wherein the motor is an n-phase brushless motor,
wherein each phase of the n-phase brushless motor includes at least two of the plurality of windings, and
wherein the connection form changing means performs the changing the connection form of the plurality of windings by changing a connection form of the at least two windings in each phase.

6. The power tool according to claim 5, wherein the connection form changing means performs the changing the connection form of the at least two windings in each phase by switching the connection form of the at least two windings in each phase between a series connection and a parallel connection.

7. The power tool according to claim 5, wherein the connection form changing means performs the changing the connection form of the at least two windings in each phase by switching the connection form of the at least two windings in each phase among a series connection, a parallel connection, and a series-parallel connection.

8. The power tool according to any one of claims 1 to 7, further comprising voltage changing means configured to perform:
changing a voltage based on the external power source after the connection form changing means performs the changing the connection form; and
applying the changed voltage to the motor.

9. The power tool according to claim 8, wherein the voltage changing means performs the changing the voltage by changing a duty ratio.
